# EUROPEAN PATENT SPECIFICATION

(11) **EP 4 291 472 B1**
(45) Date of publication and mention of the grant of the patent: **26.11.2025**
(21) Application number: 22708441.5
(22) Date of filing: 08.02.2022
(51) Int. Cl.: B62H 3/02, B62H 3/04, B62H 5/00

(54) **BICYCLE RACK**
FAHRRADSTÄNDER
SUPPORT PUR VÉLO

(30) Priority: 09.02.2021 CH 1252021
(43) Date of publication of application: 20.12.2023
(73) Proprietor: Fourown Kig, 9434 Au (CH)
(72) Inventor: D' SOUZA, Kevin, 9434 Au (CH); GRANIG, Diego, 9434 Au (CH); MELCHER, Manuel, 9434 Au (CH); SCHNEIDER, Franco, 9434 Au (CH)
(74) Representative: Rentsch Partner AG
(86) International application number: PCT/EP2022/052998
(87) International publication number: WO 2022/171616

(56) References cited:
- EP-A1- 0 587 452
- CN-U- 206 086 977

## Description

### FIELD OF THE DISCLOSURE

The present disclosure relates to the field of bicycle racks for storing bicycles securely.

### BACKGROUND OF THE DISCLOSURE

Bicycle racks are known from the prior art. For locking a bicycle these bicycle racks usually comprise a locking element for surrounding a part of the bicycle frame in a temporarily fixed manner.

**KR20100003092U** first published in 2010 in the name of Jaeyoung Tech and Jueun Steel relates to a bicycle holder including a post installed in a vertical direction on the ground, a support bracket provided on the side of the post and on which the bicycle frame is placed, and vertically movable on the post. It is mounted, and includes a locking bar that locks the bicycle frame placed on the support bracket by being bound to the support bracket by a separate locking device in a downward position.

US2014311996A1 first published in 2014 in the name of Thad V. Oviatt relates to a bicycle containment system. The system includes one or more vertical supports, one or more cantilevered crossbars pivotally connected to one or more vertical supports, one or more wheel locking mechanisms, and a control system. Each cantilevered crossbar includes two substantially parallel extending arms and a frame locking mechanism. The frame locking mechanism is made up of one or more frame locking bars and one or more frame locking actuators. Each wheel locking mechanism includes a wheel locking bar and a wheel locking actuator. The locking mechanism control system is configured to actuate the frame locking actuators and the wheel locking actuators.

US2015096335A1 first published in 2015 in the name of Bikeep relates to bike holders to securely lock all kinds of bicycles with different frames and shapes without the need to carry a personal lock. The system and method for bike locking securely locks the bike's frame and wheel.

Document EP 0 587 452 A1 shows additionally a bicycle rack mountable to a wall and/or a ground for securely storing bicycles of various sizes, the bicycle rack comprising:
a. a frame arranged for at least partially receiving a bicycle in a receiving direction essentially parallel to the ground, said frame extending inclined to the receiving direction in a first direction; and
b. a locking means for restricting the movement of the bicycle against the receiving direction, said locking means being interconnected to the frame and at least temporarily slidable in the first direction, such that a locking stance of the locking means is thereby adjustable in both the receiving direction and a direction perpendicular to the receiving direction, wherein
c. the locking means is arranged pivotable between an open position and a locking position to allow inserting a bicycle into the bicycle rack in the open position and to allow locking the bicycle in the locking position.

Bicycle racks for securely storing bicycles, as known from the prior art, have several disadvantages facing an increasing popularity of bicycles and limited space for bicycle racks to store the bicycles. This is in particular the case on company or university grounds or in city centers, where a high number of bicycles is to be stored within an unexpandable space.

### SUMMARY OF THE DISCLOSURE

It is an objective to provide a bicycle rack that is compact in size to be able to place the bicycle racks as closely together as possible, while a bicycle should be easily insertable into the bicycle rack. In addition, the bicycle rack should be able to secure bicycles of various shapes and in particular (frame) sizes, without compromising on the compactness. Furthermore, the bicycle rack should provide means to lock a bicycle, such that bringing a personal lock is made obsolete for the users of the bicycle rack.

The invention is directed to a bicycle rack mountable to a wall and/or a ground for securely storing bicycles of various sizes. The bicycle rack comprises a frame arranged for at least partially receiving a bicycle in a receiving direction essentially parallel to the ground. According to the invention, the frame is mounted to the ground and/or a wall to immobilize the bicycle rack and to hamper vandalism. Usually the frame extends at least partially in a first direction, inclined to the receiving direction. Depending on the field of application, an inclination of the first direction relative to the receiving direction is between 90 and degrees 180, in particular an angle between 110 and degrees 130. For best performance the inclination is around 120 degrees.

The bicycle rack comprises a locking means for restricting the movement of the bicycle against the receiving direction. The locking means being interconnected to the frame and at least temporarily slidable in the first direction, such that a locking stance of the locking means is thereby adjustable in both, the receiving direction and a direction perpendicular to the receiving direction. The location locking means, by being slidable in the first direction, can be adapted in a height perpendicular from the ground and in the receiving direction to fit a bicycle frame of a certain height and shape. This way the locking means can act as a stop to restrict the movement of bicycles of various frame sizes. The locking means may be formed as a locking bar, in particular an essentially L-shaped locking bar, however other forms of the locking means, such as anchored chains are thinkable. In one embodiment he locking means are at least partially made from a robust material, such as metal or the like, this is to prevent unauthorized access to the bicycle rack and/or to make vandalism more difficult.

According to the invention, ,the locking means are arranged pivotable around the first direction, between an open position and a locking position to allow inserting a bicycle into the bicycle rack in the open position and to allow locking the bicycle in the locking position. Good results can be achieved, when the locking means is arranged pivotable about 90 degrees between the open and the locking position, however any angle between 90 and 180 degrees is possible. This has the advantage, that the bicycle rack is space saving, also during operation, as the locking means stay within a width of the bicycle rack perpendicular to the receiving direction.

In other variations the frame comprises a first support extending at least partially in the first direction and the locking means being interconnected to the first support. The locking means can in particular be slidably interconnected to the first support in the first direction when the locking means is in the open position. If appropriate, the frame comprises a second support extending essentially parallel to the first support. The second support being is in some variations spaced apart from the first support a certain distance, such that a bicycle accommodated at least partially between the first and the second support. The distance between the first and the second support is preferably less than a typical width of a handlebar of a bicycle.

In some variations the locking means is configured to temporarily engage with the second support in a form locking manner, in particular in the locking position, for mechanically interconnecting the first and the second support and thereby retaining the bicycle at least partially accommodated therebetween. This provides a robust and secure locking of a bicycle. The locking means engages typically with the second support in a form locking manner when sliding in the first direction. The locking means may comprise a notch and the second support a tongue or an essentially C-shaped cross-section for engaging in a form lock, however other shapes of the locking means and the second support are possible to achieve a form lock.

To secure the location of the locking means adjusted to the size of a bicycle, the locking means is lockable at various locking stances in the first direction by a locking mechanism. Depending on the design, the locking mechanism is arranged at least partially in the first support and/or the second support and is in particular formed as a ratchet locking mechanism, however other locking mechanisms are possible, such as a bolt lock mechanism.

Depending on the field of application, the first and second support are fixedly interconnected by a base extending between the first and the second support. The base is used to mount the bicycle rack to the ground. The base and the first and the second support typically form part of the essentially U-shaped frame, in particular in a top down view in the vertical direction.

In some variations, a wheel stop is arranged fixedly interconnected to the first support, in particular via the base, for receiving a bicycle wheel and restricting the movement of the bicycle along the receiving direction. The wheel stop may comprise a third support extending from the base in an essentially vertical direction. For good results two holding brackets are attached to the third support for accommodating a bicycle wheel therebetween. The wheel stop however can also be formed by a solid and immobile object arranged adjacent to the bicycle rack in the receiving direction, such as a wall.

According to some embodiments, the frame is at least partially made from metal profiles. This has the advantage of robust construction. The metal profiles may be joined by means of at least one out of the following bolts, screws, welding, adhesives, etc.

To meet the increasing need for charging electrical bicycles, some variations comprise an electrical connector being arranged at the frame for connecting an electric bicycle such that the electric bicycle can be charged. The electrical connector being interconnected to a power supply. The electrical connector being typically arranged at an upper end of the base or the first or the second support.

In some variations a mechanical lock and/or an electronic lock is configured to open or close the locking mechanism. In a preferred variation the mechanical lock acts as a failsafe for the electronic lock. This way the user of the bicycle rack is not required to provide a personal lock anymore, since the bicycle rack is capable to securely store a bicycle therein.

A second aspect of the disclosure is directed to a bicycle rack comprising an electronic lock being configured to open or close the locking mechanism upon validation of electronic key information received in the electronic lock from an electronic key device. This allows one or more users in possession of the valid electronic key information at least temporarily exclusive access to the bicycle stored therein. The electronic key information can comprise an identification, a cryptographic key, or similar data. The identification may relate to a bicycle rack, a user, a user group, a bicycle or the like. If appropriate, the electronic key device is implemented as an electronic key card, a smart/hybrid key, an electronic key or a mobile communication device, such as a mobile phone. The electronic key device is preferably configured to transmit data stored thereon, in particular via a close range communication interface.

In some variations, the electronic lock comprises at least one memory configured to at least temporarily store electronic key information. The electronic lock being configured to validate electronic key information received in the electronic lock from an electronic key device, in particular using the electronic key information stored in the at least one memory. The validation performed by the electronic lock is in some variations implemented as a comparison between at least part of the received electronic key information with key information stored in the memory. In case of a positive result of the validation the electronic lock typically actuates the locking mechanism in order to unlock the locking means and allow the retrieval of the bicycle stored in the bicycle rack.

To allow a reservation, in particular a remote reservation, of the bicycle rack and/or a bicycle stored therein, a communication module is interconnected to the electronic lock. Depending on the design, the communication module is being configured to receive a reservation request from a computer system via a communication network, said reservation request comprising electronic key information. In addition, the communication module is typically configured to transmit the received electronic key information to the electronic lock, for storing the electronic key information in the memory. Depending on the field of application, the communication network comprises a mobile radio network, such as GSM (Global System for Mobile Communication), UMTS (Universal Mobile Telephone System), WLAN (Wireless Local Area Network) or the like. Alternatively or in addition, the communication network can comprise a wire based network, such as provided by LAN (Local Area Network), an Ethernet connection or an USB connection or the like, and/or the Internet.

In another embodiment, the validation of the electronic key information is performed remotely. Here the communication module is being configured to obtain electronic key information from an electronic key device and to transmit a validation request to a computer system via a communication network, the validation request comprising the obtained electronic key information. Alternatively or in addition, the communication module is configured to receive a validation response from the computer system via the communication network, the validation response comprising instructions for the electronic lock to open or close the locking mechanism. In some variations, the communication module obtains the electronic key information from the electronic lock.

Good results are possible when the communication module is incorporated into the electronic lock. The electronic lock is configured to read electronic key information from an electronic key device via a close range communication interface and/or via an optical interface. The close range communication interface is implemented as a radio-based communication interface, such as RFID communication interfaces (Radio Frequency Identifier), so called NFC interfaces (Near Field Communication), optical interfaces like infrared or visual communication interfaces, or Bluetooth communication interfaces.

In some variations, the bicycle rack comprises an identification element. The identification element is typically attached to or incorporated into the frame or the electronic lock. Depending on the field of application, identification element is formed as an optical identification element, such as a QR-code (Quick Response), however an electronic identification is possible as well, such as a RFID tag, or the like. The identification element is configured to be readable by a mobile communication device. The mobile communication device being usually configured to transmit a request comprising the identifier read from the identification element to the computer system via the communication network, enabling the computer system to transmit a validation response to the communication module using the received identifier. The validation response in this cases may comprise instructions for the electronic lock to actuate the locking mechanism. This way a user may unlock the bicycle racking using a mobile communication device.

In some variations the mobile communication device is further configured to receive an authentication message from the computer system via the communication network. The authentication response usually comprises electronic key information. The mobile communication device being is configured to transmit the received electronic key information to the electronic lock via a close range communication interface. Alternatively or in addition, the user may provide a key from the receives electronic key information to the electronic lock via a input device, such as a key pad, enabling the electronic lock the received key.

It is to be understood that both the foregoing general description and the following detailed description present embodiments, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The herein described disclosure will be more fully understood from the detailed description given herein below and the accompanying drawings which should not be considered limiting to the disclosure described in the appended claims. The drawings are showing:
- Fig. 1: a first variation of a bicycle rack according to the disclosure in a perspective view;
- Fig. 2: a detailed view of the bicycle rack of Fig. 1;
- Fig. 3: the first variation of Fig. 1 in a view for a side;
- Fig. 4: a section view of the first variation of Fig. 3 along the section line HH;
- Fig. 5: another perspective view of the bicycle rack of Fig. 1; and
- Fig. 6: a block diagram of a variation of a bicycle rack according to the disclosure.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as limited to the embodiments set forth herein; rather, these embodiments are provided so that this disclosure will satisfy applicable legal requirements. Whenever possible, like reference numbers will be used to refer to like components or parts.

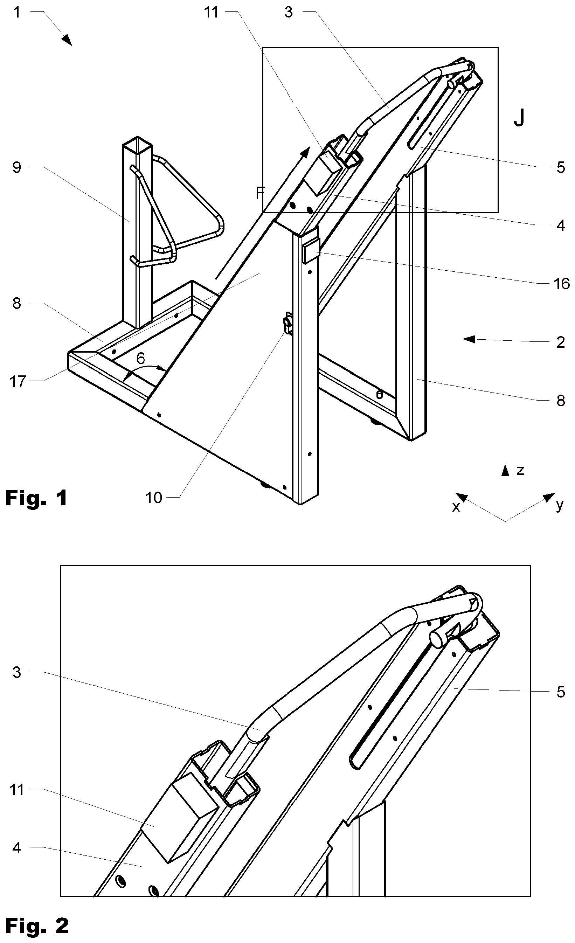

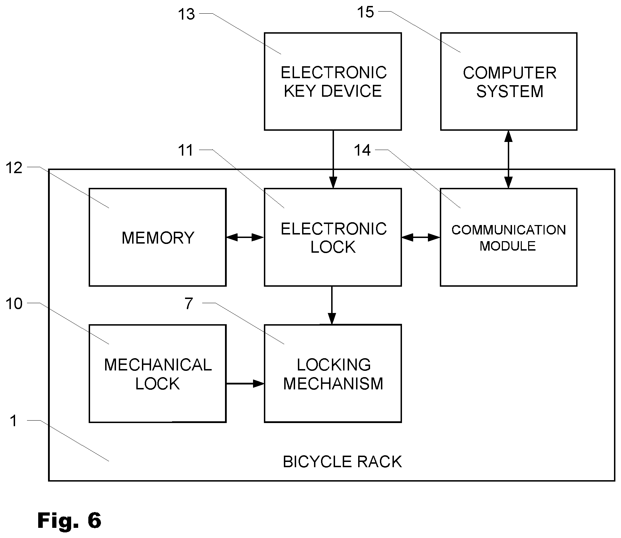

**Figures 1** to **5** show a first variation of a bicycle rack 1 according to the disclosure in different views. **Figure 6** illustrates an exemplary block diagram of components of the bicycle rack 1.

The first variation of the bicycle rack 1 typically comprises a frame 2 arranged for at least partially receiving a bicycle in a receiving direction x essentially parallel to the ground. The frame 2 extends inclined to the receiving direction x in a first direction F. The inclination 6 between the first direction F and the receiving direction x is usually between 110 degrees and 140 degrees, and in the shown variation is about 120 degrees.

The bicycle rack 1 typically comprises a locking means 3 for restricting the movement of the bicycle (not shown) against the receiving direction x. In the receiving direction x, the movement of the bicycle is restricted by a fixed object, in the shown variation by a wheel stop 8. In combination the locking means 3 and the wheel stop 9 can restrict the movement of the bicycle along the receiving direction x. The locking means 3 being usually interconnected to the frame 2 and at least temporarily slidable in the first direction F, such that a locking stance of the locking means 3 is thereby adjustable in both the receiving direction x and a direction perpendicular to the receiving direction. In the first variation the locking stance is adjustable in a height 18 from the ground and in a width measured between the wheel stop 9 and the locking means 3 in the receiving direction x. This allows to restrict the movement of bicycles of various sizes in the receiving direction x.

As best visible in **Figure 2****,** the locking means 3 is formed as an essentially L-shaped or J-shaped locking bar 3. The longer leg of the locking bar 3 is slidably interconnected to a first support 4 of the frame 2, whereas the short leg acts as a stop for the bicycle frame. The first support 4 extends preferably at least partially in the first direction F, such that the locking means 3 can slide at least partially along the first support 4. In the first variation the frame 2 comprises in addition to the first support 4, a second support 5 extending essentially parallel to the first support 4. The second support 4 is spaced apart from the first support 4 a certain distance, such that a bicycle can be accommodated at least partially between the first and the second support 4, 5. The distance between the first and the second support 4, 5 is usually less than a typical with of a handlebar of a bicycle. Typical distances are between 10 and 40 cm, preferably around 25 cm. As can be seen in **Figure 1****,** the wheel stop 9 comprises a third support extending in an essentially vertical direction z and two holding brackets are attached to the third support for accommodating a bicycle wheel therebetween.

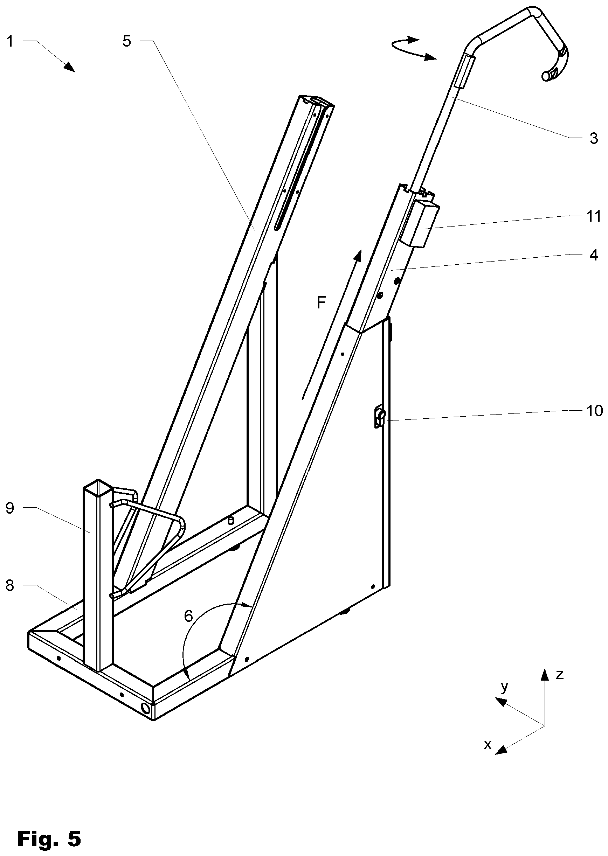

The first and second support 4, 5 are fixedly interconnected by a base 8 extending between the first and the second support 4, 5, as shown in **Figure 5****.** The base 8 is used to mount the bicycle rack 1 to the ground, e.g. by means of screws or bolts. The base 8 and the first and the second support 4, 5 form part of the essentially U-shaped frame 2, in particular in a top down view in the vertical direction. The Frame 2 is usually connectable to at least one frame of a neighboring bicycle rack (not shown). For a robust construction the frame 2 is at least partially made from metal profiles.

To limit the special extension of the bicycle rack 1 in the horizontal direction z perpendicular to the receiving direction x, the locking means 3 is pivotable, in particular pivotable around the first direction, between an open position and a locking position to allow inserting a bicycle into the bicycle rack in the open position and to allow locking the bicycle in the locking position. The open position can be seen in **Figure 5** and the locking position is shown in **Figure 1****.** In the shown variation, the locking means is pivotable about 90 degrees between the open and the locking position. In the locking position the locking means 3 is arranged essentially parallel to a plane spanned by the receiving direction x and the first direction F.

A secure restriction of the bicycle's movement in the along the receiving direction x is possible, when the locking means 3 is configured to temporarily engage with the second support 5 in a form locking manner. As best visible in **Figure 2****,** in the locking position, the locking means 3 mechanically interconnects the first and the second support 4, 5 and thereby retaining the bicycle at least partially accommodated therebetween. The locking means 3 can engage with the second support 5 in a form locking manner when sliding in the first direction F towards the ground. To achieve the form lock, the locking means 3 comprises two notches at an end section and the second support 5 an essentially C-shaped cross-section for engaging in a form lock.

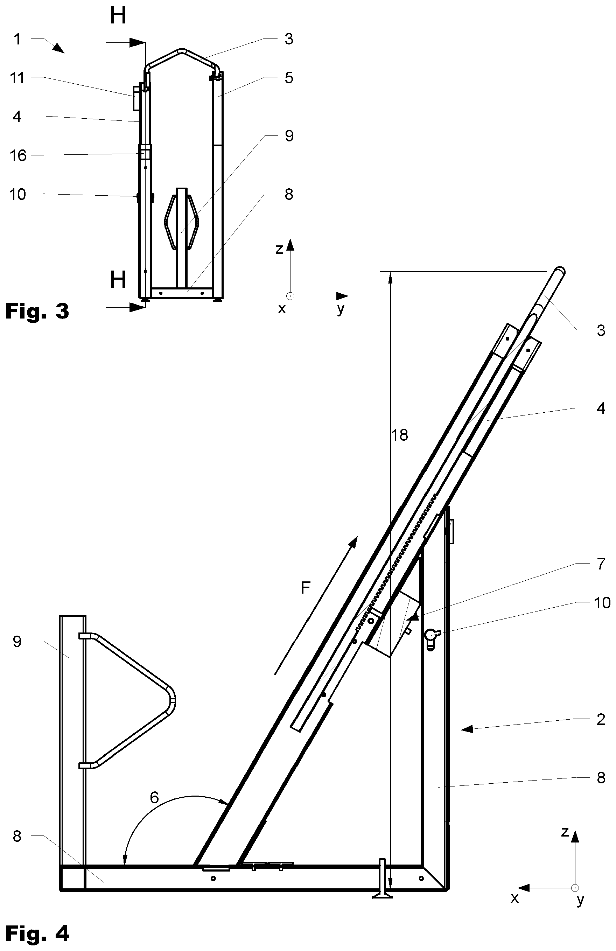

As shown in the sectional view of **Figure 4****,** the locking means 3 is lockable at various locking stances in the first direction x by a locking mechanism 7. The locking mechanism 7 is in the shown variation arranged at least partially in the first support and is formed as a ratchet locking mechanism. Here the locking means 3 comprises ratchet teeth arranged along a side of the locking bar 3 for engaging in the locking position with the ratchet locking mechanism 7. When the locking bar 3 is pivoted into the open position, the side of the locking bar 3 having arranged thereon the ratchet teeth is rotated away from the locking mechanism 7, such that the locking bar 3 becomes freely slidable in the first direction F.

To meet the increasing demand for charging stations for electric bicycles, the bicycle rack 1 comprises in the shown variation an electric connector 16 for connecting the electric bicycle to a power supply. The electrical connector 16 is usually attached to the frame 2, in particular to the base 8. As visible in **Figure 1****,** the electric connector 16 is arranged at an upper end of the base 8 to provide a good reachability.

As illustrated in **Figures 1** and **5****,** the bicycle rack 1 according to the disclosure comprises an electronic lock 11 and a mechanical lock 10. The mechanical lock 10 acts here as a failsafe for the electronic lock 11.

The electronic lock 11 is configured to actuate the locking mechanism 7 upon successful validation of electronic key information received in the electronic lock from an electronic key device 13. This is shown in **Figure 6****.** Interconnected to the electronic lock 11 is typically a communication module 14, which is in the herein described variation, like the memory 12, incorporated into the electronic lock 11. The communication module being configured to communicate with a computer system 15. The computer system 15 can be a laptop locally connected to the communication module 14 for maintenance or configuration purposes. However, the computer system 15 is typically a remote computer system 15 interconnected to the communication module 14 via a communication network. The arrows illustrated between the components indicate a one- or two-way relationship, like the mechanical lock 10 and the electronic lock 11 are respectively configured to open or close the locking mechanism 7.

The electronic key information comprises in the herein described variation an identification, in form of a number, however the usage of other data, such as cryptographic keys, for the validation is possible. The electronic key device is typically implemented as an electronic key card or a mobile communication device, such as a mobile phone or tablet.

As indicated in **Figure 6** the electronic lock 11 can comprise a memory 12 for storing, at least temporarily, electronic key information. The electronic lock 11 is configured to validate electronic key information received in the electronic lock form an electronic key device 13 using the electronic key information stored in the memory 12. The electronic lock 11 can read the electronic key information from the electronic key device 13 via a close range communication interface, in this variation via an RFID interface.

To provide a (remote) reservation possibility of the bicycle rack 1, either for storing a bicycle or to reserve a bicycle stored therein, the communication module 14 is configured to receive a reservation request from the computer system 15 via the communication network. The reservation request comprising electronic key information, which can be stored in the memory 12 of the thereto connected electronic lock 11. For this purpose, the communication module 14 is in addition configured to transmit the received electronic key information to the electronic lock 11.

Alternatively or in addition, the communication module 11 is being configured to obtain electronic key information from an electronic key device 13 via the electronic lock 11 and to transmit a validation request to the computer system 15 via a communication network, the validation request comprising electronic key information. This enables the computer system 15 to validate the electronic key information received from the communication module 14. The communication module 14 can thus also be configured to receive a validation response from the computer system 15, the validation response typically comprising instructions for the electronic lock to open or close (or do nothing) the locking mechanism.

Rather, the words used in the specification are words of description rather than limitation, and it is understood that various changes may be made within the scope of the claims.

### LIST OF DESIGNATIONS

- 1: Bicycle rack
- 2: Frame (bicycle rack)
- 3: Locking means
- 4: First support
- 5: Second support
- 6: Inclination
- 7: Locking mechanism
- 8: Base
- 9: Wheel stop
- 10: Mechanical lock
- 11: Electronic lock
- 12: Memory
- 13: Electronic key device
- 14: Communication module
- 15: Computer system
- 16: Electrical connector
- 17: Identification element
- 18: Height (stance of the locking means)

## Claims

1. A bicycle rack (1) mountable to a wall and/or a ground for securely storing bicycles of various sizes, the bicycle rack (1) comprising:
a. a frame (2) arranged for at least partially receiving a bicycle in a receiving direction (x) essentially parallel to the ground, said frame (2) extending inclined to the receiving direction (x) in a first direction (F); and
b. a locking means (3) for restricting the movement of the bicycle against the receiving direction (x), said locking means (3) being interconnected to the frame (2) and at least temporarily slidable in the first direction (F), such that a locking stance of the locking means (3) is thereby adjustable in both the receiving direction (x) and a direction perpendicular to the receiving direction (x), wherein
c. the locking means (3) is arranged pivotable around the first direction (F) between an open position and a locking position to allow inserting a bicycle into the bicycle rack (1) in the open position and to allow locking the bicycle in the locking position.

2. The bicycle rack (1) according to at least one of the previous claims, **wherein** the frame (2) comprises a first support (4) extending at least partially in the first direction (F) and the locking means (3) being interconnected to the first support (4), the locking means (3) being in particular slidably interconnected to the first support (4) in the first direction (F) when the locking means (3) is in the open position.

3. The bicycle rack (1) according to at least one of the previous claims, **wherein** the frame (2) comprises a second support (5) extending essentially parallel to the first support (4) and being therefrom spaced apart a certain distance, such that a bicycle can be accommodated at least partially between the first and the second support (4, 5).

4. The bicycle rack (1) according to claim 3, **wherein** the locking means (3) is configured to temporarily engage with the second support (5) in a form locking manner, in particular in the locking position, for mechanically interconnecting the first and the second support (4, 5) and thereby retaining the bicycle at least partially accommodated therebetween.

5. The bicycle rack (1) according to at least one of the previous claims, **wherein** an inclination (6) of the first direction (F) relative to the receiving direction (x) is between 90 and 180 degrees, in particular an angle between 120 and 140 degrees.

6. The bicycle rack (1) according to at least one of the previous claims, **wherein** the locking means (3) is lockable at various locking stances in the first direction (F) by a locking mechanism (7) arranged at least partially in the first support (4) and/or the second support (5), said locking mechanism (7) is in particular formed as a ratchet locking mechanism (7).

7. The bicycle rack (1) according to at least one of the claims 3 to 6, **wherein** the first and second support (4, 5) are fixedly interconnected by a base (8) extending between the first and the second support (4, 5).

8. The bicycle rack (1) according to at least one of the previous claims, **wherein** a wheel stop (9) is fixedly interconnected to the first support (4), in particular via the base (8), for receiving a bicycle wheel and restricting the movement of the bicycle in the receiving direction (x).

9. The bicycle rack (1) according to at least one of the previous claims, **wherein** the frame (10) is at least partially made from metal profiles.

10. The bicycle rack (1) according to claim 6, **wherein** a mechanical lock (10) and/or an electronic lock (11) is respectively configured to open or close the locking mechanism (7), said electronic lock (11) being configured to open or close the locking mechanism (7) upon validation of electronic key information received in the electronic lock from an electronic key device.

11. The bicycle rack (1) according to claim 10, **wherein** electronic lock (11) comprises at least one memory (12) configured to at least temporarily store electronic key information and the electronic lock (11) is configured to validate electronic key information received in the electronic lock (11) from an electronic key device (13) using the electronic key information stored in the at least one memory (12).

12. The bicycle rack (1) according to at least one of the previous claims 10 and 11, **wherein** a communication module (14) is interconnected to the electronic lock (11), said communication module (14) being configured to
a. receive a reservation request from a computer system (15) via a communication network, said reservation request comprising electronic key information; and to
b. transmit the received electronic key information to the electronic lock (11), for storing the electronic key information in the memory (12).

13. The bicycle rack (1) according to at least one of the previous claims 10 to 12, **wherein** a communication module (14) is interconnected to the electronic lock (11), said communication module (14) being configured to
a. obtain electronic key information from an electronic key device (13); and
b. transmit a validation request to a computer system (15) via a communication network, the validation request comprising electronic key information; and/or
c. receive a validation response from the computer system (15) via the communication network, the validation response comprising instructions for the electronic lock (11) to open or close the locking mechanism (7).

14. The bicycle rack (1) according to at least one of the previous claims 12 to 13, **wherein** the electronic lock (14) is configured to read electronic key information from an electronic key device (13) via a close range wireless communication interface and/or via an optical interface.

## Patentansprüche

1. Fahrradständer (1), der an einer Wand und/oder einem Boden montierbar ist, zum sicheren Aufbewahren von Fahrrädern verschiedener Größen, wobei der Fahrradständer (1) umfasst:
a. ein Gestell (2), das angeordnet ist, um zumindest teilweise ein Fahrrad in einer Aufnahmerichtung (x) im Wesentlichen parallel zum Boden aufzunehmen, wobei sich das Gestell (2) in einer ersten Richtung (F) geneigt zu der Aufnahmerichtung (x) erstreckt; und
b. eine Verriegelungsvorrichtung (3) zum Einschränken der Bewegung des Fahrrads entgegen der Aufnahmerichtung (x), wobei die Verriegelungsvorrichtung (3) mit dem Gestell (2) verbunden und zumindest vorübergehend in die erste Richtung (F) verschiebbar ist, so dass eine Verriegelungsposition der Verriegelungsvorrichtung (3) dadurch sowohl in der Aufnahmerichtung (x) als auch in einer zur Aufnahmerichtung (x) senkrechten Richtung einstellbar ist, wobei
c. die Verriegelungsvorrichtung (3) um die erste Richtung (F) zwischen einer offenen Stellung und einer verriegelten Stellung schwenkbar angeordnet ist, um das Einschieben eines Fahrrads in den Fahrradständer (1) in der offenen Stellung und das Verriegeln des Fahrrads in der verriegelten Stellung zu ermöglichen.

2. Fahrradständer (1) gemäß mindestens einem der vorhergehenden Ansprüche, wobei das Gestell (2) eine erste Stütze (4) umfasst, die sich zumindest teilweise in der ersten Richtung (F) erstreckt, und die Verriegelungsvorrichtung (3) mit der ersten Stütze (4) verbunden ist, wobei die Verriegelungsvorrichtung (3) insbesondere verschiebbar in die erste Richtung (F) mit der ersten Stütze (4) verbunden ist, wenn die Verriegelungsvorrichtung (3) in der offenen Stellung ist.

3. Fahrradständer (1) gemäß mindestens einem der vorhergehenden Ansprüche, wobei das Gestell (2) eine zweite Stütze (5) umfasst, die sich im Wesentlichen parallel zur ersten Stütze (4) erstreckt und von dieser um eine bestimmte Entfernung beabstandet ist, so dass ein Fahrrad zumindest teilweise zwischen der ersten und der zweiten Stütze (4, 5) aufgenommen werden kann.

4. Fahrradständer (1) gemäß Anspruch 3 , wobei die Verriegelungsvorrichtung (3) konfiguriert ist, um vorübergehend mit der zweiten Halterung (5) formschlüssig in Verbindung zu stehen, insbesondere in der verriegelten Stellung, um die erste und die zweite Stütze (4, 5) mechanisch miteinander zu verbinden und dadurch das dazwischen aufgenommene Fahrrad zu halten.

5. Fahrradständer (1) gemäß mindestens einem der vorhergehenden Ansprüche, wobei eine Neigung (6) der ersten Richtung (F) gegenüber der Aufnahmerichtung (x) zwischen 90 und 180 Grad, insbesondere ein Winkel zwischen 120 und 140 Grad, beträgt.

6. Fahrradständer (1) gemäß zumindest einem der vorhergehenden Ansprüche, wobei die Verriegelungsvorrichtung (3) durch einen zumindest teilweise an der ersten Stütze (4) und/oder der zweiten Stütze (5) angeordneten Verriegelungsmechanismus (7) an verschiedenen Verriegelungspositionen in der ersten Richtung (F) verriegelbar ist, wobei der Verriegelungsmechanismus (7) insbesondere als Ratschenverriegelungsmechanismus (7) ausgebildet ist.

7. Fahrradständer (1) gemäß mindestens einem der Ansprüche 3 bis 6 , wobei die erste und die zweite Stütze (4, 5) durch einen zwischen der ersten und der zweiten Stütze (4, 5) verlaufenden Unterbau (8) fest miteinander verbunden sind.

8. Fahrradständer (1) gemäß mindestens einem der vorhergehenden Ansprüche, wobei mit der ersten Stütze (4), insbesondere über den Unterbau (8), ein Radanschlag (9) fest verbunden ist, der ein Fahrradrad empfängt und die Bewegung des Fahrrads in der Aufnahmerichtung (x) einschränkt.

9. Fahrradständer (1) gemäß mindestens einem der vorhergehenden Ansprüche, wobei das Gestell (10) zumindest teilweise aus Metallprofilen hergestellt ist.

10. Fahrradständer (1) gemäß Anspruch 6 , wobei ein mechanisches Schloss (10) und/oder ein elektronisches Schloss (11) jeweils so konfiguriert ist, dass es den Verriegelungsmechanismus (7) öffnet oder schließt , wobei das elektronische Schloss (11) so konfiguriert ist, dass es den Verriegelungsmechanismus (7) bei der Validierung von elektronischen Schlüsselinformationen, die in dem elektronischen Schloss von einer elektronischen Schlüsselvorrichtung empfangen werden, öffnet oder schließt.

11. Fahrradständer (1) gemäß Anspruch 10 , wobei das elektronische Schloss (11) mindestens einen Speicher (12) umfasst, der so konfiguriert ist, dass er elektronische Schlüsselinformationen zumindest vorübergehend speichert, und das elektronische Schloss (11) so konfiguriert ist, dass es elektronische Schlüsselinformationen, die im elektronischen Schloss (11) von einer elektronischen Schlüsselvorrichtung (13) empfangen werden, unter Verwendung der in dem mindestens einen Speicher (12) gespeicherten elektronischen Schlüsselinformationen validiert.

12. Fahrradständer (1) gemäß mindestens einem der vorhergehenden Ansprüche 10 und 11 , wobei ein Kommunikationsmodul (14) mit dem elektronischen Schloss (11) verbunden ist, wobei das Kommunikationsmodul (14) konfiguriert ist, um
a. eine Reservierungsanfrage von einem Computersystem (15) über ein Kommunikationsnetzwerk zu empfangen, wobei die Reservierungsanfrage elektronische Schlüsselinformationen umfasst; und um
b. die empfangenen elektronischen Schlüsselinformationen an das elektronische Schloss (11) zu übertragen, um die elektronischen Schlüsselinformationen in dem Speicher (12) zu speichern.

13. Fahrradständer (1) gemäß mindestens einem der vorhergehenden Ansprüche 10 bis12 , wobei ein Kommunikationsmodul (14) mit dem elektronischen Schloss (11) verbunden ist, wobei das Kommunikationsmodul (14) konfiguriert ist, um
a. elektronische Schlüsselinformationen von einer elektronischen Schlüsselvorrichtung (13) zu erhalten; und
b. eine Validierungsanfrage an ein Computersystem (15) über ein Kommunikationsnetzwerk zu übertragen, wobei die Validierungsanfrage elektronische Schlüsselinformationen umfasst; und/oder
c. eine Validierungsantwort von dem Computersystem (15) über das Kommunikationsnetzwerk zu empfangen, wobei die Validierungsantwort Anweisungen für das elektronische Schloss (11) umfasst, den Verriegelungsmechanismus (7) zu öffnen oder zu schließen.

14. Fahrradständer (1) gemäß mindestens einem der vorhergehenden Ansprüche 12 bis 13 , wobei das elektronische Schloss (14) konfiguriert ist, um elektronische Schlüsselinformationen von einer elektronischen Schlüsselvorrichtung (13) über eine Nahbereichs-Funkkommunikationsschnittstelle und/oder über eine optische Schnittstelle zu lesen.

## Revendications

1. Support à bicyclette (1) pouvant être monté sur un mur et/ou un sol pour stocker en toute sécurité des bicyclettes de différentes tailles, le support à bicyclette (1) comprenant :
a. un cadre (2) arrangé pour recevoir au moins partiellement une bicyclette dans une direction de réception (x) essentiellement parallèle au sol, ledit cadre (2) s'étendant de manière inclinée par rapport à la direction de réception (x) dans une première direction (F) ; et
b. un moyen de verrouillage (3) pour limiter le mouvement de la bicyclette contre la direction de réception (x), ledit moyen de verrouillage (3) étant relié au cadre (2) et au moins temporairement coulissant dans la première direction (F), de sorte qu'une posture de verrouillage du moyen de verrouillage (3) est ainsi réglable à la fois dans la direction de réception (x) et dans une direction perpendiculaire à la direction de réception (x), dans laquelle
c. le moyen de verrouillage (3) est arrangé pour pouvoir pivoter autour de la première direction (F) entre une position ouverte et une position de verrouillage afin de permettre l'insertion d'une bicyclette dans le support à bicyclette (1) dans la position ouverte et de permettre le verrouillage de la bicyclette dans la position de verrouillage.

2. Support à bicyclette (1) selon au moins l'une des revendications précédentes, dans lequel le cadre (2) comprend un premier support (4) s'étendant au moins partiellement dans la première direction (F) et le moyen de verrouillage (3) étant relié au premier support (4), le moyen de verrouillage (3) étant notamment relié de manière coulissante au premier support (4) dans la première direction (F) lorsque le moyen de verrouillage (3) est en position ouverte.

3. Support à bicyclette (1) selon au moins l'une des revendications précédentes, dans lequel le cadre (2) comprend un deuxième support (5) s'étendant sensiblement parallèlement au premier support (4) et en étant espacé d'une certaine distance, de sorte qu'une bicyclette peut être logé au moins partiellement entre le premier et le deuxième support (4, 5).

4. Support à bicyclette (1) selon la revendication 3 , dans lequel le moyen de verrouillage (3) est configuré pour s'engager temporairement avec le deuxième support (5) selon un accouplement de forme, notamment en position de verrouillage, pour relier mécaniquement le premier et le deuxième support (4, 5) et ainsi retenir la bicyclette qui est au moins partiellement logé entre eux.

5. Support à bicyclette (1) selon au moins l'une des revendications précédentes, dans lequel une inclinaison (6) de la première direction (F) par rapport à la direction de réception (x) est comprise entre 90 et 180 degrés, en particulier un angle compris entre 120 et 140 degrés.

6. Support à bicyclette (1) selon au moins l'une des revendications précédentes, dans lequel le moyen de verrouillage (3) est verrouillable à différentes postures de verrouillage dans la première direction (F) par un mécanisme de verrouillage (7) arrangé au moins partiellement dans le premier support (4) et/ou le deuxième support (5), ledit mécanisme de verrouillage (7) est notamment formé en tant que mécanisme de verrouillage à cliquet (7).

7. Support à bicyclette (1) selon au moins l'une des revendications 3 à6 , **dans** lequel le premier et le deuxième support (4, 5) sont reliés de manière fixe par une base (8) s'étendant entre le premier et le deuxième support (4, 5).

8. Support à bicyclette (1) selon au moins l'une des revendications précédentes, dans lequel une butée de roue (9) est reliée de manière fixe au premier support (4), notamment par la base (8), pour recevoir une roue de bicyclette et limiter le déplacement de la bicyclette dans la direction de réception (x).

9. Support à bicyclette (1) selon au moins l'une des revendications précédentes, dans lequel le cadre (10) est au moins partiellement réalisé à partir de profilés métalliques.

10. Support à bicyclette (1) selon la revendication 6 , dans lequel une serrure mécanique (10) et/ou une serrure électronique (11) est respectivement configurée pour ouvrir ou fermer le mécanisme de verrouillage (7) , ladite serrure électronique (11) étant configurée pour ouvrir ou fermer le mécanisme de verrouillage (7) sur validation d'informations de clé électronique reçues dans la serrure électronique en provenance d'un dispositif de clé électronique.

11. Support à bicyclette (1) selon la revendication 10 , dans lequel la serrure électronique (11) comprend au moins une mémoire (12) configurée pour stocker au moins temporairement des informations de clé électronique et la serrure électronique (11) est configurée pour valider des informations de clé électronique reçues dans la serrure électronique (11) en provenance d'un dispositif de clé électronique (13) à l'aide des informations de clé électronique stockées dans l'au moins une mémoire (12).

12. Support à bicyclette (1) selon au moins l'une des revendications précédentes 10 et11 , dans lequel un module de communication (14) est relié à la serrure électronique (11), ledit module de communication (14) étant configuré pour
a. recevoir une demande de réservation en provenance d'un système informatique (15) via un réseau de communication, ladite demande de réservation comprenant des informations clés électroniques ; et à
b. transmettre les informations de clé électronique reçues à la serrure électronique (11), pour stocker les informations de clé électronique dans la mémoire (12).

13. Support à bicyclette (1) selon au moins l'une des revendications précédentes 10 à 12 , dans lequel un module de communication (14) est relié à la serrure électronique (11), ledit module de communication (14) étant configuré pour
a. obtenir des informations de clé électronique à partir d'un dispositif de clé électronique (13) ; et
b. transmettre une demande de validation à un système informatique (15) via un réseau de communication, la demande de validation comprenant des informations clés électroniques ; et/ou
c. recevoir une réponse de validation du système informatique (15) via le réseau de communication, la réponse de validation comprenant des instructions pour que la serrure électronique (11) ouvre ou ferme le mécanisme de verrouillage (7).

14. Support à bicyclette (1) selon au moins l'une des revendications précédentes 12 à 13 , dans lequel la serrure électronique (14) est configurée pour lire des informations de clé électronique provenant d'un dispositif de clé électronique (13) via une interface de communication en champ proche et/ou via une interface optique.
